Europäisches Patentamt

(19) European Patent Office

Office européen des brevets

(11) Publication number: **0 020 092**
**B1**

## (12) EUROPEAN PATENT SPECIFICATION

(45) Date of publication of patent specification: **11.05.83**

(51) Int. Cl.³: **B 62 M 9/12**

(21) Application number: **80301694.8**

(22) Date of filing: **22.05.80**

(54) Cycle derailleur.

(30) Priority: **24.05.79 JP 65345/79**
**24.05.79 JP 65346/79**

(43) Date of publication of application:
**10.12.80 Bulletin 80/25**

(45) Publication of the grant of the patent:
**11.05.83 Bulletin 83/19**

(84) Designated Contracting States:
**DE FR GB IT NL**

(56) References cited:
**FR - A - 2 395 880**
**US - A - 3 974 707**
**US - A - 4 030 375**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Minamimachi**
**Midorigaoka Sakai-Shi, Osaka (JP)**

(74) Representative: **Szczuka, Jan Tymoteusz**
**Cruikshank & Fairweather 19 Royal Exchange Square**
**Glasgow G1 3AE Scotland (GB)**

Courier Press, Leamington Spa, England.

Cycle derailleur

This invention relates to a multi-speed derailleur for a cycle, which comprises a fixing member, two link members and a movable member mounting a chain guide, and has a return spring disposed for acting between two of said members, so that with the aid of a control cable and the action of said return spring said movable member can be reciprocably moved relative to said fixing member for changing the cycle speed.

A modification of this type of derailleur has been proposed in U.S. Patent No. 3,974,707 in which the derailleur is provided with a control member having a plurality of recesses corresponding to the number of speed change stages and mounted on one of the fixed, link and movable members with a ball engageable with each of the recesses and carried by another one of said members which is movable relative to said one member, so that when both the members move relative to one another the ball moves relative to the recesses and engages therewith to be positioned in accordance with a desired speed change stage and retained at this position.

With such a construction it is however impossible to return the chain guide by means of a return spring, because the ball is resiliently engaged in each of the recesses for retaining the chain guide in position. This results in a need for the use of two cables or of a so-called push-pull type cable to enable the chain guide to be forcibly displaced in both forward and return directions.

When no return spring is used, the ball has to be subjected to a force sufficient for disengagement of the ball from each of the recesses, to permit light operation of a control lever. Also since it is not possible to use a conventional pull-type control cable production costs are substantially increased.

Another modification of this type of derailleur has been proposed in U.S. Patent No. 4,030,375 in which the derailleur has a chain guide which is movable in one direction by pulling on a pull-type control wire and returnable in the opposite direction by the action of a return spring, and has at one of the fixed, link and movable members, a cam having a plurality of notches corresponding to the number of speed change stages and on another member movable relative thereto, a roller or pin engageable with the notches, so that the roller or pin engages with a selected notch to accurately position the chain guide in accordance with a desired speed change stage.

With such a construction it is possible to position the chain guide in accordance with a desired speed change stage even when the control cable changes in length. However in the first place, it is structurally impossible to maintain the chain guide in position by the notches, thereby requiring the provision of a frictional resistance in a control lever for overcoming the force of the return spring, which naturally results in the need for a larger force to operate the control lever, especially in the forward direction. In the second place this type of derailleur produces a considerable degree of noise when a drive chain is switched to a selected sprocket. In other words, the roller or pin moves along the cam face and relative to the notches following the relative movement between the two derailleur members upon pulling of the control wire or action of the return spring. In particular, the roller or pin follows an arcuate path of movement across the notches around the border therebetween.

As a result, when the chain is switched to a selected one sprocket by pulling of the control wire, the chain guide moves following the operation of control wire continuously.

Accordingly, when the control wire is operated to reciprocably move the chain guide, the chain contacts relatively slowly a sprocket to which the chain is to be switched thereby generating noise and increasing wear of the chain and sprocket.

In a further alternative solution there has been proposed a derailleur which is provided with means through which a retainer engaging with one of the notches is forcibly moved for disengagement therefrom, so that the return spring can then act to quickly move the movable member.

Such a construction is, however, effective only for quickly moving the movable member by the action of the return spring. Hence, when a rider slowly operates the control lever to pull the control wire substantial noise is still generated and wear of the drive chain and sprocket is not reduced.

It is an object of the present invention to reduce one or more of the above problems and in particular to provide a derailleur which can accurately position a movable member and maintain it in position in accordance with a desired speed change stage even with a conventional pull-type control wire, reduce noise during reciprocal movement of the chain guide even with slow operation of the control wire by a rider, and reduce wear of the drive chain and sprocket.

The present invention provides a cycle derailleur, which comprises a fixing member, two link members and a movable member mounting a chain guide, and has a return spring disposed for acting between two of said members, so that with the aid of a control cable and the action of said return spring said movable member can be reciprocably moved relative to said fixing member to bring said chain guide into position corresponding to a desired speed change stage, a control member for positioning said movable member in any one of a plurality of predetermined positions, said control member being connected to one of said fixing, link and movable members and having a plurality of engagement portions corresponding to said predetermined positions which correspond in turn to different speed change stages, said engagement portions each having an engagement face for each speed change stage, said engagement faces being interconnected by connecting faces; a retainer engageable with any one of said engagement faces of said control member for retaining said movable member in a said predetermined position corresponding to a desired speed, said retainer being pivotally connected to another one of said fixing, link and movable members which other member is movable relative to said one member supporting said control member and being connected to one end of said control cable, characterised in that there is provided a tension spring arranged for biasing said retainer in a direction corresponding to tensioning of said control cable and in a direction corresponding to disengagement of the retainer from the engagement portions of the control member, said retainer and control member being formed and arranged so that when said control cable is operated for moving said movable member, with a control cable stroke less than a predetermined value, said retainer is retained in engagement with a said engagement portion of said control member, whilst in the case of a stroke greater than said predetermined value said retainer is disengaged from said engagement portion under the influence of a force exerted by the control cable when said control cable is pulled and under the influence of a force exerted by said tension spring when said control cable is slackened; and in that there is provided an energy storage spring arranged for acting between said retainer, and one of said fixing, link and movable members, so that when said control cable is pulled against the action of said return spring so as to swing said retainer, energy is stored in said energy storage spring and when said control cable is pulled so as to disengage said retainer from a said engagement portion, the energy stored in said energy storage spring provides displacement of said movable member and chain guide at a rapid rate substantially independent of the speed with which said control cable is pulled in use of the derailleur.

With a derailleur of the present invention the mounting of the control element and retainer may be not only directly on two relatively movable members of the derailleur members (fixing member, two linkage members and movable member) but alternatively on pivot pins connecting these members or indirectly on the two members via a third member secured or pivotally connected thereto. The present invention is of course applicable to a front derailleur as well as to a rear derailleur. The derailleur of the invention may be used with a control cable comprising a control wire without an outer sheath as well as with a cable comprising an inner wire and an outer sheath, with one of the inner wire and outer sheath being supported to the retainer and the other to one of the four derailleur members.

The derailleur of the present invention enables the movable member to be rapidly moved reciprocably by means of pulling of the control cable and the force of the return spring substantially independently of the speed of operation of the cable via the control lever, whereby noise generated from the drive chain guided by the chain guide resulting from contact with the sprockets, is minimized and whereby wear of the drive chain and sprockets is significantly reduced.

Further preferred features and advantages of the invention will appear from the following description given by way of example of some preferred embodiments illustrated with reference to the accompanying drawings in which:

Fig. 1 is a front elevation of a first embodiment of a derailleur of the invention;

Fig. 2 is a bottom plan view thereof;

Fig. 3 is a sectional view taken on the line III—III in Fig. 1;

Fig. 4 is a sectional view taken on the line IV—IV in Fig. 2;

Figs. 5 to 10 are bottom plan views showing various operating conditions of the derailleur of Fig. 1; and

Figs. 11 to 20 show further, modified, embodiments of the invention, in which:

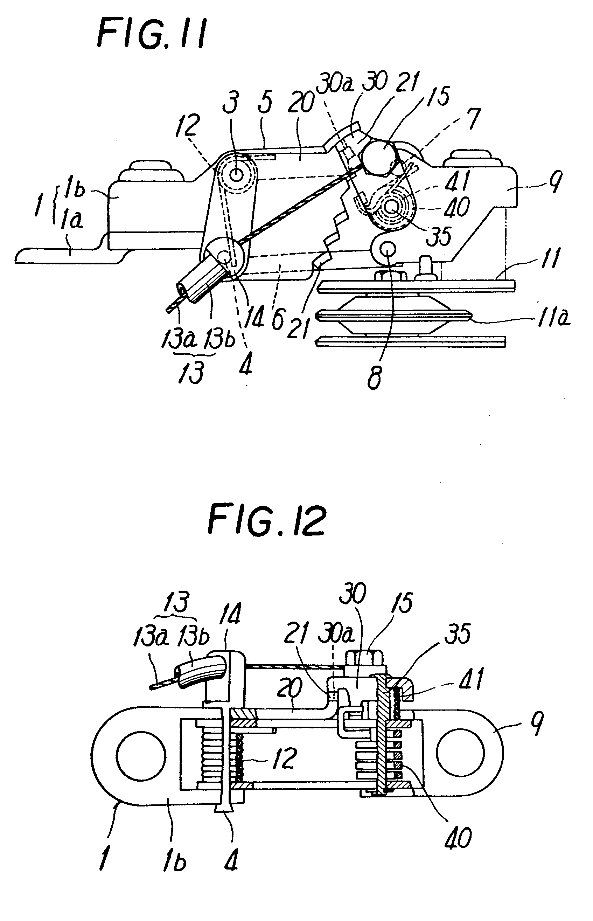

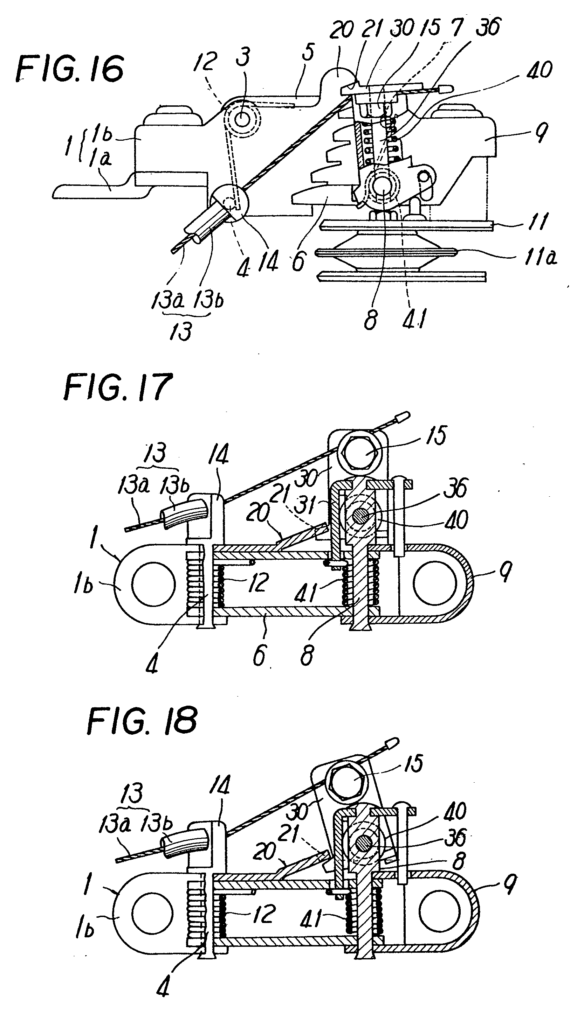

Figs. 11 and 16 are bottom plan views thereof;

Figs. 12 and 17 are corresponding partial rear elevations of the same;

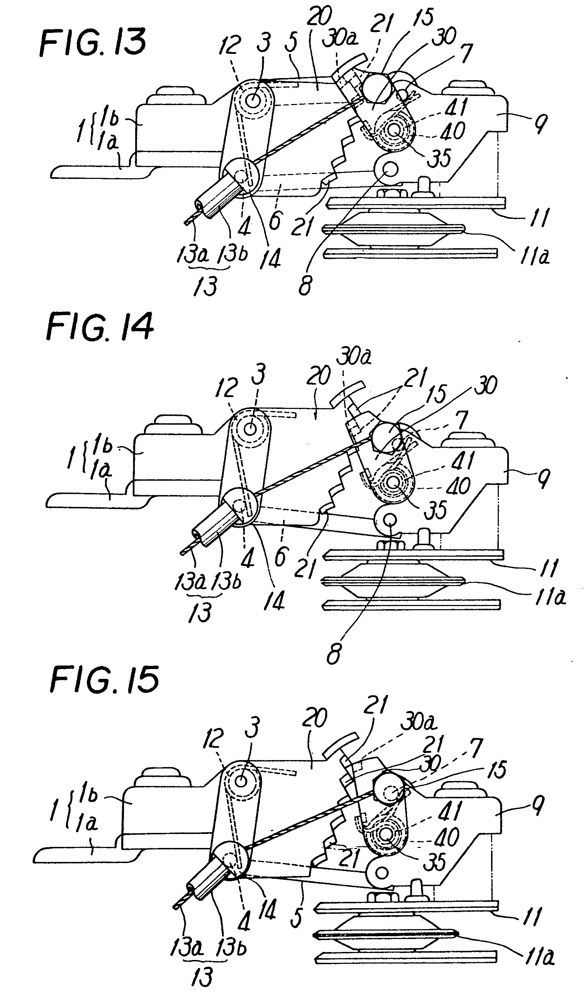

Figs. 13 to 15, 19, and 20, are bottom plan views showing various operating conditions of the derailleurs of the modified embodiments; and

Fig. 18 is a partial rear elevation showing one of the modified embodiments in one operating condition.

The embodiments shown in the drawings are all rear derailleurs each of which has four principal members, namely, a fixing member 1, two parallel link members 5 and 6, and a movable member 9, and also a return spring 12. The fixing member 1 comprises a bracket 1a mountable, in use, with a hub shaft (not shown) to a rear fork end (not shown) of a cycle and a support body 1b mounted on the bracket 1a so as to be pivotable within a given angular range about a pivot shaft 2 mounted on the bracket 1a, but non-movable in the direction of movement of the movable member 9.

The support body 1b is provided at one side thereof with opposed sidewalls carrying the two link members 5 and 6 pivotally connected thereto by means of two pivot pins 3 and 4.

The link members 5 and 6 are each generally C- of U-shaped in section and arranged with their open sides opposite each other.

The movable member 9 is similar in shape to the support body 1b, has at one side opposed sidewalls, and is pivotally connected to the foremost ends of the link members 5 and 6 by means of pivot pins 7 and 8. At the other side of the movable member 9, a chain guide 11 having two guide pulleys 11a is mounted so as to be rotatable within a given range about a pivot shaft 10 disposed parallel to the pivot shaft 2.

In use the guide pulleys 11a carry thereon a drive chain (not shown) and are movable axially of a multi-stage freewheel (not shown) to guide the chain to be switched to a desired sprocket on the freewheel for changing the cycle speed.

The above described constructional features of the derailleur are conventional and thus well understood in the art.

The present invention has been so designed that the derailleur constructed as described above is provided on the two relatively movable members 1, 9 of the four principal derailleur members with a control member 20 having a plurality of engagement portions 21 corresponding to the number of speed change stages, a retainer 30 engageable with any one of the engagement portions 21 to resist displacement of the chain guide 11, an energy storage spring 40, and a tension spring 41 for maintaining a control wire 13 under tension, so that the chain guide 11, during speed changing, is positioned in accordance with a desired speed change stage and simultaneously retained in position, whilst when the retainer 30 is disengaged from the engagement portion 21 the chain guide 11 is free to be rapidly displaced to a position corresponding to another speed.

The control member 20 and retainer 30 are mountable on the two relatively movable members in any one of the following arrangements: the control member 20 is mounted on the fixing member 1 and the retainer 30 on the movable member 9 or either of the link members 5 and 6; the control member 20 is mounted on the movable member 9 and the retainer 30 on the fixing member 1 or either of the link members 5 and 6; and the control member 20 is mounted on one of the link members 5 and 6 and the retainer 30 on the fixing member 1, movable member 9, or the other of the link members 5 and 6. Besides these various possible arrangements, the control member 20 and retainer 30 could also be supported on the pivot pins 3, 4, 7 and 8, interconnecting the abovementioned four derailleur members, either directly or indirectly through separate members (not shown) attached to the four members 1, 5, 6, 9 or pins 3, 4, 7, 8. These alternative arrangements are all included within the scope of the present invention.

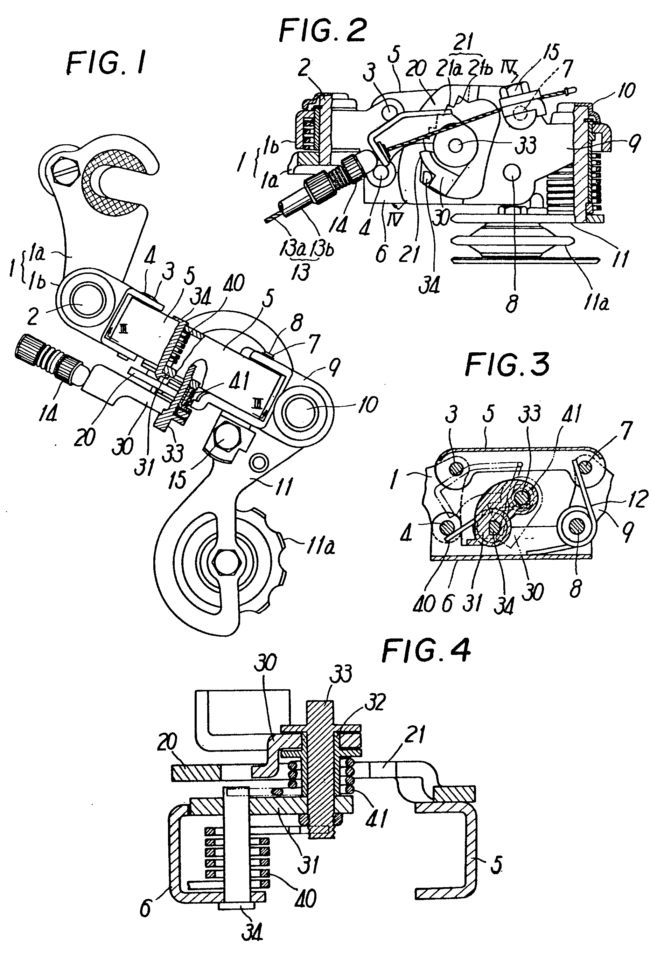

One embodiment of the invention, in which the control member 20 is mounted on the movable member 9 and the retainer 30 on one link member 6, will now be described in detail with reference to Figs. 1 to 10.

The control member 20 in this embodiment comprises a portion formed integrally with one sidewall of the movable member 9 and extending therefrom toward the fixing member 1. The portion 20 has an aperture whose periphery is formed to provide six engagement portions 21 in the form of ratchet teeth.

The engagement portions 21 have engagement faces 21a for each retaining the retainer 30 in engagement therewith thereby to hold the chain guide 11 in a given position, and connecting faces 21b extending between adjacent engagement faces. The engagement faces 21a are arranged along a part-circular arc around a pin 33 to be further described below so that each corresponds to a different speed and has a length corresponding to the travel of the control lever (not shown) upon change from one speed to another.

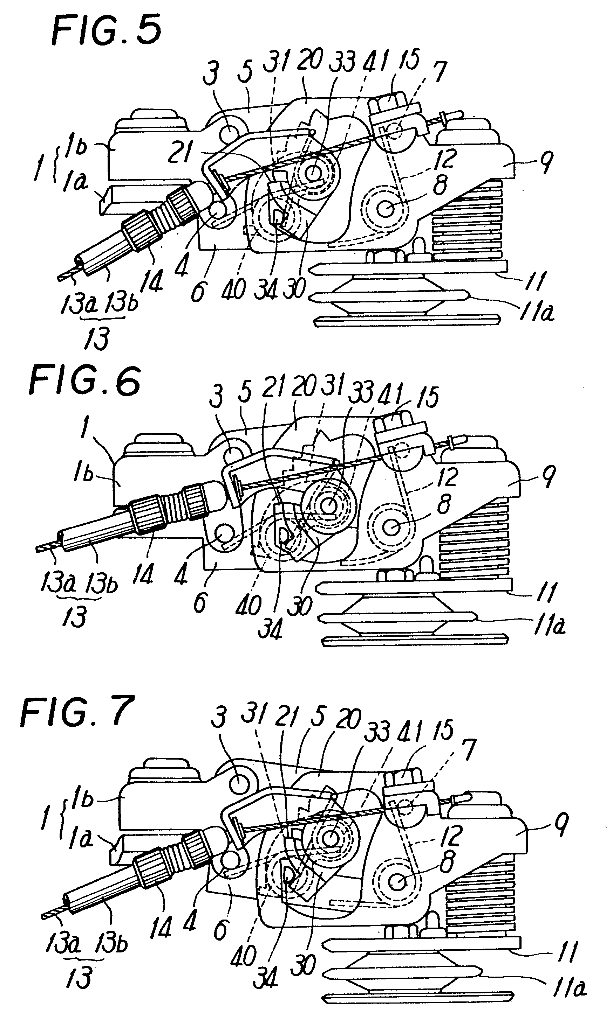

The retainer 30, as shown in Fig. 4, is generally in the form of a pawl engageable with each of the engagement portions 21, and pivotally mounted on a support arm 31 by means of a guide tube 32 and pin 33, the support arm 31 being pivotally connected to the link member 6 through a pin 34. The retainer 30 is operated by the control cable 13 which comprises an inner control wire 13a and an outer sheath 13b as shown. One of the inner wire 13a and outer sheath 13b may be supported on the retainer 30 and the other on the movable member 9, either of the link members 5 and 6, or either of the pivot pins 7 and 8 supporting the movable member 9. In the drawings, the outer sheath 13b is supported on the retainer 30 through a support 14 and the inner control wire 13 on the movable member 9 through a fixture 15.

The energy storage spring 40 and tension spring 41 are interposed between the retainer 30 and the link member 6 carrying the retainer 30 via the support arm 31. The energy storage spring 40 is coiled about the pin 34 and retained at a first end to the pin 33 and at a second end to the pin 34. The tension spring 41 is coiled onto the guide tube 32 sleeved around the pin 33 and retained at one end to the pin 34 and at the other end to a projection extending from the retainer 30.

The return spring 12 may be interposed between the fixing member 1 and the movable member 9 or either one of the link members 5 and 6; between the movable member 9 and either of the link members 5 and 6; or between the link members 5 and 6. In the drawings, the return spring 12 is shown interposed between the movable member 9 and the link member 6.

When the control cable 13 is displaced through a distance less than that required for changing from one speed to another, the retainer 30 is maintained in engagement with a given one of the engagement portions 21 thereby keeping the chain guide 11 stationary. When the cable 13 is, however, displaced through a distance greater than that required for changing from one speed to another the retainer 30 is disengaged from one of the engagement portions 21, enabling the return spring 12 or energy storage spring 40 to act on the chain guide 11 to rapidly move it to a desired speed change stage.

In detail, if the spring force of the return spring 12 is represented by $F_1$; that of the energy storage spring 40, $F_2$; and that of the tension spring 41, $F_3$; these spring forces are arranged to have relative magnitudes such that $F_2 > F_1 > F_3$. Thus, when the control cable 13 is pulled to move the chain guide 11 against the force of the return spring 12, the energy storage spring 40 is resiliently deformed to store energy from the force applied through the control cable 13, so that the stored energy can be used to rapidly shift the chain guide 11. On the other hand, if the control cable 13 is slackened to return the chain guide 11 under the influence of the return spring 12, the tension spring 41 acts on the retainer 30 to swing it away from an engagement portion 21 engaged with said retainer 30. The retainer 30 then disengages from said engagement portion 21, whereby the energy stored in the return spring 12 can rapidly shift the chain guide 11 in the return direction.

The operation of the above described derailleur will now be described in detail.

In Fig. 5, the chain guide 11 is shown positioned for the highest speed stage. When the control lever is operated to pull the control wire 13a to move the chain guide 11 from the position in Fig. 5 towards a position as shown in Fig. 7 corresponding to a low speed stage, the retainer 30 and support arm 31 are subjected to a biasing force caused by movement of the outer sheath 13b relative to the control wire 13a, thereby reducing the separation between the support 14 and the fixture 15. Hence, the retainer 30 at first swings clockwise around the pin 33, at which point the tension spring 41 is resiliently deformed. Then, the support arm 31 swings clockwise around the pin 34 through the swinging motion of the retainer 30, whereby the energy storage spring 40 is resiliently deformed to conserve therein the energy of the force transmitted through the control wire 13a. At this point, if the control wire 13a is pulled through a distance less than that required for a speed change, the energy storage spring 40 is simply resiliently deformed without disengagement of the retainer 30 from the engagement portion 21 with which it is engaged and the chain guide 11 is maintained stationary (with respect to lateral movement). When the distance through which the control wire 13a is pulled, is greater than said required amount the support arm 31 swings beyond a given angle, and the retainer 30 supported to the support arm 31 disengages from the engagement portion 21, thus adopting the condition shown in Fig. 6.

Upon disengagement of the retainer 30 from the engagement portions 21, the energy stored in the energy storage spring 40 immediately allows the chain guide 11 to move forward rapidly. The retainer 30 together with the support arm 31 then swings counterclockwise around the pin 34 to engage with a successive engagement portion 21 to stop the forward movement of chain guide 11. As a result, the rapid displacement of the chain guide 11 by the energy stored in the energy storage spring 40 can considerably reduce noise generated by contact of the chain with the sprocket during changing of speed. In other words, the retainer 30 moves in the same direction as each engagement face 21a and along it, and after disengaging from the engagement face 21a, moves along each connecting face 21b. It should be noted that the movable member 9 is restrained from moving during movement of the retainer 30 along the engagement face 21a, and then allowed to move upon disengagement of the retainer 30 from the engagement face 21a, thereby enabling the chain guide 11 to be rapidly displaced. Accordingly, the chain guide 11, which is rapidly displaced, can reduce noise generated by the chain during switching to a desired sprocket. Also, since the retainer 30 engages with one of the engagement portions 21 thereby to position the chain guide 11 for a desired speed change stage, the chain guide 11, even when the control cable 13a slightly varies in its displacement distance as required for changing speed, is stopped and retained in the correct position corresponding to any given speed change stage.

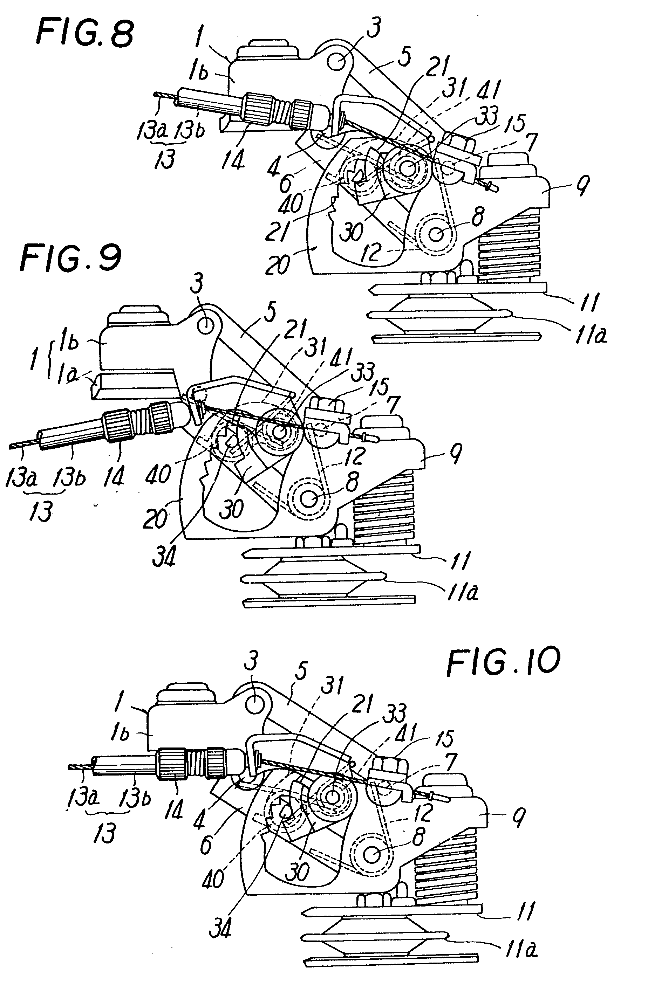

The movement of the chain guide 11 from the position corresponding to the lowest speed stage in Fig. 8 to that corresponding to the high speed stage in Fig. 10 under the influence of the return spring 12 with the control wire 13a slackened, occurs as described below.

In this case, the chain guide 11 moves rapidly by use only of the return spring 12 resiliently deformed by a pull of the control wire 13a, and without the energy storage spring 40. With a slack control wire 13a as shown in Fig. 8, the tension spring 41, which always biases the retainer 30 so as to tend to tension the control wire 13a, allows the retainer 30 to swing counterclockwise for disengagement from one of the engagement portions 21 as shown in Fig. 9. In this case, when the control wire 13a is slackened to an extent less than a certain amount, the movable member 9 remains stationary due to engagement of the retainer 30 with the engagement portion 21. Upon disengagement of the retainer 30 therefrom, though, the movable member 9 is released so that the energy stored in the return spring 12 can rapidly return the chain guide 11, at which point the retainer 30, which is biased counterclockwise by the tension spring 41, automatically engages with the next engagement portion 21 and is retained thereat due to rapid repositioning of the chain guide 11 immediately after disengagement of the retainer 30.

Hence, the rapid repositioning of the chain guide 11 substantially reduces the noise generated by the chain in contact with a sprocket while it is being switched thereto. In other words, the noise is considerably reduced due to the fact that the retainer 30 moves along each engagement face 21a and parallel thereto, the movable member 9 is held against movement during the movement of the retainer 30 along the engagement face 21a, and the disengagement of the retainer 30 from the engagement portion 21 moves the movable member 9 by use of the energy conserved in the return spring 12, so that the chain guide 11 may rapidly return.

Further embodiments of the invention will now be described with reference to Figs. 11 to 20.

The derailleurs shown in Figs. 11 to 20 each have the control member 20 mounted on the fixing member 1 and the retainer 30 mounted on the movable member 9, the inner control wire 13a being secured to the retainer 30 and the outer sheath 13b therefor being secured to the fixing member 1. These modified embodiments of Figs. 11 to 20 are basically similar in construction to the embodiment shown in Figs. 1 to 10, in which like members are represented by like reference numerals.

In Figs. 11 to 15, engagement portions 21 on the control member 20 extend perpendicularly therefrom and a projection 30a engageable with each of the engagement portions 21 extends from the retainer 30. The retainer 30 is pivotally connected to the movable member 9 through a support pin 35. An energy storage spring 40 and a tension spring 41 are wound onto the support pin 35, the energy storage spring 40 being retained at a first end to the retainer 30 and at a second end to one axial end of a pivot pin 7, connecting the movable member 9 to a like member 5 so that the energy storage spring 40 is not resiliently deformed by the clockwise movement of retainer 30, in other words, in the working direction of the tension spring 41. The tension spring 41 is retained at one end to the retainer 30 and at its other end to said pivot pin 7, so that the energy storage spring 40 does not act when the tension spring 41 acts. In Fig. 11, when the control wire 13a is pulled, the retainer 30 swings counterclockwise to store in the energy storage spring 40 the energy transmitted via the control wire 13a. Upon disengagement of the retainer 30 from the engagement portion 21 as shown in Fig. 13, the energy stored in the spring 40 allows the chain guide 11 to move forward rapidly, and the retainer 30, as shown in Fig. 14, then engages with the next engagement portion 21 thereby to stop the forward movement of chain guide 11. When the control wire 13a is slackened in a position as shown in Fig. 14, the retainer 30 is subjected to the force of the tension spring 41 and swings clockwise to disengage from the engagement portion 21, into a position as shown in Fig. 15. In this position, the energy stored in the return spring 12 allows the chain guide 11 to return in a rapid movement whereupon the retainer 30 engages with an adjacent engagement portion 21 to bring the chain guide 11 to a halt.

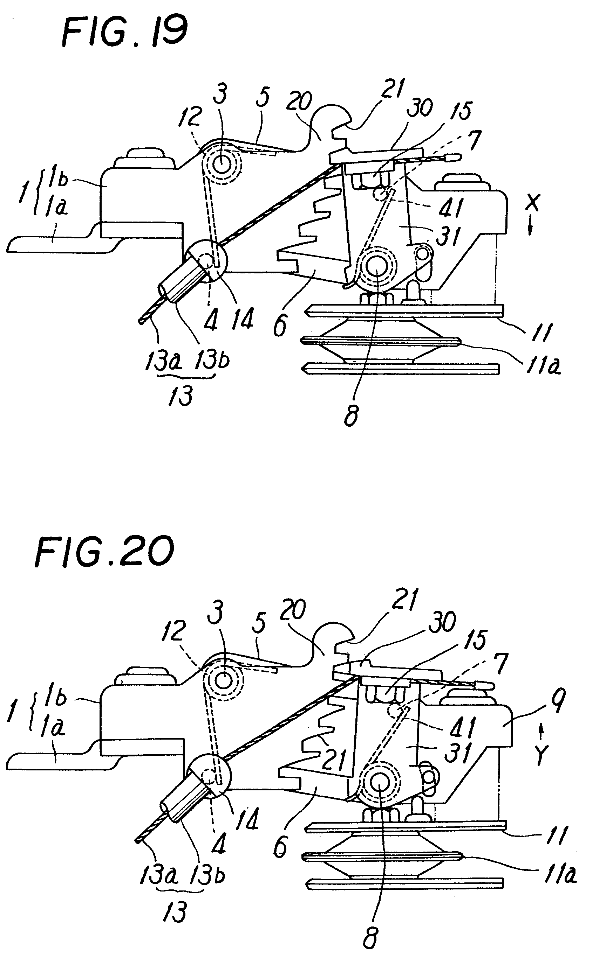

A further modified form of the derailleur of the invention is shown in Figs. 16 to 20. In detail, a pivot pin 8 is extended axially for pivotally supporting the support arm 31, a support pin 36 is mounted on the pin 8 so as to extend perpendicularly thereto and pivotally supports the retainer 30. An energy storage spring 40 is wound onto the support pin 36 and retained at a first end to the retainer 30 and at a second end to the support arm 31. The tension spring 41 is wound onto the pivot pin 8 and retained at one end to the support arm 31 and at its other end to the pin 7. The energy storage spring 40 and tension spring 41 are arranged so as to operate independently of each other and differ in their biasing direction so that the energy storage spring 40 does not act in the biasing direction of the tension spring 41. In a position as shown in Figs. 16 and 17, when the control wire 13a is pulled, the retainer 30 swings counterclockwise in Fig. 17 around the support pin 36, whereby the energy transmitted through the control wire 13a is stored in the energy storage spring 40. The retainer 30 disengages from the engagement portion 21 as shown in Fig. 18. At this stage, the separation between the control wire sheath support 14 and the control wire fixture 15 is reduced in accordance with the pulling of the control wire 13a, whereby the energy stored in the energy storage spring 40 acts to move the chain guide 11 rapidly against the force of the return spring 12 and in the direction of forward movement as shown by the direction of the arrow X in Fig. 19. Also, the retainer 30, as shown in Fig. 19, engages with one of the engagement portions 21 to stop forward movement of the chain guide 11. In Fig. 19, when the control wire 13a is slackened, the tension spring 41 acts on the retainer 30 to swing together with the support arm 31 clockwise around the pivot pin 8, whereby the retainer 30 disengages from said engagement portion 21, to adopt the position shown in Fig. 20. From this position, the chain guide 11 is rapidly returned in the direction indicated by the arrow Y in Fig. 20. The restoration of the position of the chain guide 11 allows the retainer 30 to engage with the one engagement portion 21 and retain the chain guide 11 stationary.

As will be clearly understood from the above description, in a derailleur of the present invention the retainer engages with the engagement portions of the control member to stop reciprocal movement of the chain guide for gear changing. The retainer is maintained in engagement with the engagement portions to prevent such reciprocal movement of the chain guide when the control cable is displaced by less than the required amount but disengages from the engagement portions when the control cable displacement is greater than or equal to the required amount to allow the energy storage spring or return spring to rapidly displace the chain guide. Hence, the chain guide can be accurately and correctly positioned with respect to each sprocket and be reliably retained in position. Also noise generated by the drive chain contacting with the sprockets during shifting of the chain guide, can be eliminated regardless of the speed of operation of the control cable and drive chain and sprocket wear reduced.

The use of a simple pull-type control cable having an inner wire and outer sheath also helps to minimise production costs.

## Claims

1. A cycle derailleur, which comprises a fixing member (1), two link members (5, 6) and a movable member (9) mounting a chain guide (11), and has a return spring (12) disposed for acting between two of said members (6, 9), so that with the aid of a control cable (13) and the action of said return spring (12) said movable member (9) can be reciprocably moved relative to said fixing member (1) to bring said chain guide (11) into a position corresponding to a desired speed change stage, a control member (20) for positioning said movable member (9) in any one of a plurality of predetermined positions, said control member (20) being connected to one (9) of said fixing (1), link (5, 6) and movable (9) members and having a plurality of engagement portions (21) corresponding to said predetermined positions which correspond in turn to different speed change stages, said engagement portions (21) each having an engagement face (21a) for each speed change stage, said engagement faces being interconnected by connecting faces (21b); a retainer (30) engageable with any one of said engagement faces (21a) of said control member (20) for retaining said movable member (9) in a said predetermined position corresponding to a desired speed, said retainer (30) being pivotally connected (33, 34) to another one (6) of said fixing (1), link (5, 6) and movable (9) members which other member (6) is movable relative to said one member (9) supporting said control member (20), and being connected to one end (14) of said control cable (13), characterised in that there is provided a tension spring (41) arranged for biasing said retainer (30) in a direction corresponding to tensioning of said control cable (13) and in a direction corresponding to disengagement of the retainer (30) from the engagement portions (21) of the control member (20), said retainer (30) and control member (20) being formed and arranged so that when said control cable (13) is operated for moving said movable member (9), with a control cable stroke less than a predetermined value, said retainer (30) is retained in engagement with a said engagement portion (21) of said control member (20), whilst in the case of a stroke greater than said predetermined value said retainer (30) is disengaged from said engagement portion (21) under the influence of a force exerted by the control cable (13) when said control cable (13) is pulled and under the influence of a force exerted by said tension spring (41) when said control cable (13) is slackened; and in that there is provided an energy storage spring (40) arranged for acting between said retainer (30), and one (6) of said fixing (1), link (5, 6,) and movable (9) members, so that when said control cable (13) is pulled against the action of said return spring (12) so as to swing said retainer (30), energy is stored in said energy storage spring (40) and when said control cable (13) is pulled so as to disengage said retainer (30) from a said engagement portion (21), the energy stored in said energy storage spring (40) provides displacement of said movable member (9) and chain guide (11) at a rapid rate substantially independent of the speed with which said control cable (13) is pulled in use of the derailleur.

2. A derailleur according to claim 1, wherein said control member (20) is mounted on said fixing member (1).

3. A derailleur according to claim 2, wherein said retainer (30) is mounted on said movable member (9).

4. A derailleur according to claim 2, wherein said retainer (30) is mounted on one of said link members (5, 6).

5. A derailleur according to claim 1, wherein said control member (20) is mounted on said movable member (9).

6. A derailleur according to claim 5, wherein said retainer (30) is mounted on said fixing member (1).

7. A derailleur according to claim 5, wherein said retainer (30) is mounted on one of said link members (5, 6).

8. A derailleur according to claim 1, wherein said control member (30) is mounted on one of said link members (5, 6).

9. A derailleur according to claim 8, wherein said retainer (30) is mounted on said fixing member (1).

10. A derailleur according to claim 8, wherein said retainer (30) is mounted on said movable member (9).

11. A derailleur for a bicycle according to claim 8, wherein said retainer (30) is mounted on the other one of said link members (5, 6).

12. A derailleur according to claim 1, wherein a support arm (31) is pivotally mounted on one of said fixed (1), link (5, 6) and movable (9) members, said retainer (30) is pivotally mounted on said support arm (31), said tension spring (41) is disposed for acting between said support arm (31) and said retainer (30), and said energy storage spring (40) engages at said first end thereof said retainer (30) and at its second end with another member movable relative to said one of said fixed (1), link (5, 6) and movable (9) members which supports said support arm (31).

13. A derailleur according to claim 12, wherein said support arm (31) and retainer (30) are supported by pivot pins (31, 33) extending parallel to pivot pins (3, 4, 7, 8) connecting said fixed (1) link (5, 6) and movable (9) members, and said engagement portions (21) provided on said control member (20) are in the form of ratchet teeth.

14. A derailleur according to any one of claims 1 to 13, wherein said control member (20) is in the form of a generally plate-like member, the engagement portions (21) extending inwardly from the outer peripheral surface of said control member (20) with arcuate engagement faces (21a).

15. A derailleur according to claim 1, wherein a support arm (31) is supported on one (8) of a plurality of pivot pins (3, 4, 7, 8) connecting said fixed (1), link (5, 6) and movable (1) members, said support arm (31) engaging with said one end of said tension spring (41), said retainer (30) being pivotally supported on said support arm (31) through a support pin (36) extending perpendicularly to said pivot pin (8), and said energy storage spring (40) engages at its first end said retainer (30) and at its second end with said support arm (31).

16. A derailleur according to any one of claims 1 to 15, wherein when the spring force of said return spring (12) is represented by $F_1$, that of said energy storage spring (40) is represented by $F_2$, and that of said tension spring (41) is represented by $F_3$, said spring forces have a relation therebetween such that $F_2 > F_1 > F_3$.

**Revendications**

1. Dérailleur pour bicyclette, qui comprend une pièce de fixation (1), deux pièces de liaison (5, 6) et une pièce mobile (9) portant un guidage de chaîne (11), et qui comporte en outre un ressort de rappel (12) disposé pour agir entre deux des dites pièces (6, 9), de sorte qu'à l'aide d'un câble de commande (13) et de l'action de ce ressort de rappel (12) la pièce mobile (9) peut être déplacée dans un sens ou dans l'autre par rapport à la pièce de fixation (1) pour amener le guidage de chaîne (11) dans une position correspondant à un étage désiré de changement de vitesse; une pièce de commande (20) pour placer la pièce mobile (9) dans l'une quelconque d'une pluralité de positions prédéterminées, la pièce de commande (20) étant reliée à l'une (9) des pièces de fixation (1), de liaison (5, 6) et mobile (9) et comportant une pluralité de parties d'enclenchement (21) correspondant aux dites positions prédéterminées qui correspondent elles-mêmes à différents étages de changement de vitesse, ces parties d'enclenchement (21) comportant chacune une face d'enclenchement (21a) pour chaque étage de changement de vitesse, ces faces d'enclenchement étant reliées par des faces de raccordement (21b); une pièce de retenue (30) que peut venir en prise avec l'une quelconque des faces d'enclenchement (21a) de la pièce de commande (20) pour retenir la pièce mobile (9) dans une dite position prédéterminée correspondant à une vitesse désirée, la pièce de retenue (30) étant reliée de façon pivotante (33, 34) à une autre (6) des pièces de fixation (1), de liaison (5, 6) et mobile (9), cette autre pièce (6) étant mobile par rapport à la première pièce (9) supportant la pièce de commande (20) et étant reliée à une extrémité (14) du câble de commande (13); le dit dérailleur étant caractérisé en ce qu'il comporte un ressort de tension (41) disposé de façon à pousser la pièce de retenue (30) dans une direction correspondant à la mise en tension du câble de commande (13) et dans une direction correspondant au dégagement de la pièce de retenue (30) des parties d'enclenchement (21) de la pièce de commande (20), la pièce de retenue (30) et la pièce de commande (20) étant formées et disposées de façon à ce que, lorsque le câble de commande (13) est actionné pour déplacer la pièce mobile (9), avec une course du câble de commande inférieure à une valeur prédéterminée, la pièce de retenue (30) soit retenue en contact avec une partie d'enclenchement (21) de la pièce de commande (20), tandis que dans le cas d'une course supérieure à ladite valeur prédéterminée la pièce de retenue (30) est dégagée de la partie d'enclenchement (21) sous l'influence d'une force exercée par le câble de commande (13), lorsque ce câble de commande (13) est tiré, et sous l'influence d'une force exercée par le ressort de tension (41), lorsque le câble de commande (13) est relâché; et en ce qu'il comporte un ressort (40) de stockage d'énergie, disposé pour agir entre la pièce de retenue (30) et l'une (6) des pièces de fixation (1), de liaison (5, 6) et mobile (9), de façon à ce que, lorsque le câble de commande (13) est tiré contre l'action du ressort de rappel (12) pour faire pivoter la pièce de retenue (30), l'énergie soit stockée dans ce ressort (40) de stockage d'énergie, et lorsque le câble de commande (13) est tiré pour dégager la pièce de retenue (30) d'une partie d'enclenchement (21), l'énergie stockée dans le ressort (40) de stockage d'énergie provoque le déplacement de la pièce mobile (9) et du guidage de chaîne (11) à une vitesse rapide, sensiblement indépendante de la vitesse à laquelle le câble de commande (13) est tiré pour faire fonctionner le dérailleur.

2. Dérailleur suivant la revendication 1, dans lequel la pièce de commande (20) est montée sur la pièce de fixation (1).

3. Dérailleur suivant la revendication 2, dans lequel la pièce de retenue (30) est montée sur la pièce mobile (9).

4. Dérailleur suivant la revendication 2, dans lequel la pièce de retenue (30) est montée sur l'une des pièces de liaison (5, 6).

5. Dérailleur suivant la revendication 1, dans lequel la pièce de commande (20) est montée sur la pièce mobile (9).

6. Dérailleur suivant la revendication 5, dans lequel la pièce de retenue (30) est montée sur la pièce de formation (1).

7. Dérailleur suivant la revendication 5, dans lequel la pièce de retenue (30) est montée sur l'une des pièces de liaison (5, 6).

8. Dérailleur suivant la revendication 1, dans lequel la pièce de commande (30) est montée sur l'une des pièces de liaison (5, 6).

9. Dérailleur suivant la revendication 8, dans lequel la pièce de retenue (30) est montée sur la pièce de fixation (1).

10. Dérailleur suivant la revendication 8, dans lequel la pièce de retenue (30) est montée sur la pièce mobile (9).

11. Dérailleur de bicyclette suivant la revendication 8, dans lequel la pièce de retenue (30) est montée sue l'autre des pièces de liaison (5, 6).

12. Dérailleur suivant la revendication 1, dans lequel un bras support (31) est monté de façon pivotante sur l'une des pièces fixes (1), de liaison (5, 6) et mobile (9), la pièce de retenue (30) est montée de façon pivotante sur ce bras supprot (31), le ressort de tension (41) est disposé pour agir entre le bras support (31) et la pièce de retenue (30), et le ressort (40) de stockage d'énergie est arrêté à sa première extrémité par la pièce de retenue (30) et à sa deuxième extrémité par une autre pièce mobile par rapport à celle des pièces fixe (1), de liaison (5, 6) et mobile (9) qui supporte le bras support (31).

13. Dérailleur suivant la revendication 12, dans lequel le bras support (31) et la pièce de retenue (30) sont supportés par des tiges de pivot (31, 33) parallèles à des tiges de pivot (3, 4, 7, 8) reliant les pièces fixe (1), de liaison (5, 6) et mobile (9), et les parties d'enclenchement (21) prévues sur la pièce de commande (20) sont en forme de dents à rochet.

14. Dérailleur suivant l'une quelconque des revendications 1 à 13 dans lequel la pièce de commande (20) est en forme d'une pièce sensiblement plate, les parties d'enclenchement (21) étant dirigées vers l'intérieur, à partir de la surface périphérique extérieure de la pièce de commande (20), avec des faces d'enclenchement courbes (21a).

15. Dérailleur suivant la revendication 1, dans lequel un bras support (31) est supporté sur l'une (8) d'une pluralité de tiges de pivot (3, 4, 7, 8) reliant les pièces fixes (1), de liaison (5, 6) et mobile (1), ce bras support (31) étant en contact avec une extrémité du ressort de tension (41), la pièce de retenue (30) étant supportée de façon pivotante sur le bras support (31) par l'intermédiaire d'une tige support (36) disposée perpendiculairement à la tige de pivot (8), et le ressort (40) de stockage d'énergie est en contact à sa première extrêmité avec la pièce de retenue (30) et à sa deuxième extrêmité avec le bras support (31).

16. Dérailleur suivant l'une quelconque des revendications 1 à 15, dans lequel, lorsque la force élastique du ressort de rappel (12) est représentée par $F_1$, celle du ressort (40) de stockage d'énergie est représentée par $F_2$ et celle du ressort de tension (41) est représentée par $F_3$, ces forces élastiques ont entre elles une relation telle que $F_2 > F_1 > F_3$.

**Patentansprüche**

1. Fahrradgangschaltung, bestehend aus einem Befestigungsglied (1), zwei Verbindungsgliedern (5, 6) und einem eine Kettenführung (11) tragenden beweglichen Glied (9) sowie mit einer ihre Wirkung zwischen diesen beiden Gliedern (6, 9) ausübenden Rückstellfeder (12), so dass mit Hilfe eines Kabelzugs (13) und der Wirkung dieser Rückstellfeder (12) dieses bewegliche Glied (9) gegenüber jenem Befestigungsglied (1) hin und her bewegbar ist, um diese Kettenführung (11) in die einer gewünschten Gangschaltstufe entsprechende Stellung zu bringen, einem Steuerglied (20) zur Verstellung dieses beweglichen Glieds (9) in irgendeine einer Mehrzahl vorbestimmter Stellungen, wobei dieses Steuerglied (20) mit einem (9) von jenen Befestigungs- (1), Verbindungs- (5, 6) und beweglichen (9) Gliedern verbunden ist und eine Mehrzahl Jenen vorbestimmten Stellungen entsprechende Eingriffsteile (21) aufweist, welche Stellungen ihrerseits unterschiedlichen Gangschaltstufen entsprechen, wobei diese Eingriffsteile (21) je eine Eingriffsfläche (21a) für jede Gangschaltstufe aufweisen und die Eingriffsflächen durch Verbindungsflächen (21b) miteinander verbunden sind, sowie einer Raste (30), die mit irgendeiner dieser Eingriffsflächen (21a) dieses Steuerglieds (20) zum Einrasten dieses beweglichen Glieds (9) in jener vorbestimmten, einem gewünschten Gang entsprechenden Stellung in Eingriff kommen kann, wobei diese Raste (30) mit einem anderen (6) von jenen Befestigungs- (1), Verbindungs- (5, 6) und beweglichen (9) Gliedern, welches andere Glied (6) gegenüber diesem einen dieses Steuerglied (20) abstützenden Glied (9) beweglich ist, gelenkig verbunden (33, 34) und mit einem Ende (14) jenes Kabelzugs (13) verbunden ist, dadurch gekennzeichnet, dass eine Zugfeder (41) vorgesehen ist, die diese Raste (30) in einer dem Spannen jenes Kabelzugs (13) entsprechenden Richtung und in einer dem Ausrücken der Raste (30) aus den Eingriffsteilen (21) des Steuerglieds (20) entsprechenden Richtung vorspannen kann, wobei diese Raste (30) und das Steuerglied (20) so ausgebildet und angeordnet sind, dass bei Betätigung des Kabelzugs (13) zum Bewegen dieses beweglichen Glieds (9) mit einem geringeren Kabelzugweg als dem vorbestimmten Wert diese Raste (30) in Eingriff mit diesem Eingriffsteil (21) jenes Steuerglieds (20) einrastet, während sie im Fall eines grösseren Wegs als diesem vorbestimmten Wert unter dem Einfluss einer von dem Kabelzug (13) bei dessen Ziehen ausgeübten Kraft und unter dem Einfluss einer von jener Zugfeder (41) beim Lockern dieses Kabelzugs (13) ausgeübten Kraft aus diesem Eingriffsteil (21) ausgerückt wird, und dass eine Energiespeicherfeder (40) vorgesehen ist, die zwischen dieser Raste (30) und einem (6) von jenen Befestigungs- (1), Verbindungs- (5, 6) und beweglichen (9) Gliedern wirken kann, so dass beim Ziehen des Kabelzugs (13) entgegen der Wirkung jener Rückstellfeder (12) zum Schwenken dieser Raste (30) Energie in dieser Energiespeicherfeder (40) gespeichert wird und beim Ziehen des Kabelzugs (13) zum Ausrücken dieser Raste (30) aus jenem Eingriffsteil (21) die in dieser Energiespeicherfeder (40) gespeicherte Energie eine Verschiebung dieses beweglichen Glieds (9) und der Kettenführung (11) mit hoher Geschwindigkeit bewirkt, die von der Geschwindigkeit, mit der dieser Kabelzug (13) im Gebrauch der Gangschaltung gezogen wird, weitgehend unabhängig ist.

2. Gangschaltung nach Anspruch 1, worin dieses Steuerglied (20) auf diesem Befestigungsglied (1) angebracht ist.

3. Gangschaltung nach Anspruch 2, worin diese Raste (30) auf diesem beweglichen Glied (9) angebracht ist.

4. Gangschaltung nach Anspruch 2, worin diese Raste (30) auf einem dieser Verbindungsglieder (5, 6) angebracht ist.

5. Gangschaltung nach Anspruch 1, worin dieses Steuerglied (20) auf diesem beweglichen Glied (9) angebracht ist.

6. Gangschaltung nach Anspruch 5, worin diese Raste (30) auf diesem Befestigungsglied (1) angebracht ist.

7. Gangschaltung nach Anspruch 5, worin diese Raste (30) auf einem dieser Verbindungsglieder (5, 6) angebracht ist.

8. Gangschaltung nach Anspruch 1, worin dieses Steuerglied (20) auf einem dieser Verbindungsglieder (5, 6) angebracht ist.

9. Gangschaltung nach Anspruch 8, worin diese Raste (30) auf diesem Befestigungsglied (1) angebracht ist.

10. Gangschaltung nach Anspruch 8, worin diese Raste (30) auf diesem beweglichen Glied (9) angebracht ist.

11. Gangschaltung für ein Fahrrad nach Anspruch 8, worin diese Raste (30) auf dem anderen dieser Verbindungsglieder (5, 6) angebracht ist.

12. Gangschaltung nach Anspruch 1, worin ein Stützarm (31) auf einem von diesen Befestigungs- (1), Verbindungs- (5, 6) und beweglichen (9) Gliedern gelenkig angebracht ist, diese Raste (30) auf diesem Stützarm (31) gelenkig angebracht ist, diese Zugfeder (41) zwischen diesem Stützarm (31) und dieser Raste (30) wirken kann und diese Energiespeicherfeder (40) mit ihrem ersten Ende an dieser Raste (30) und mit ihrem zweiten Ende an einem anderen, gegenüber jenem einen von jenen Befestigungs (1), Verbindungs- (5, 6) und beweglichen (9) Gliedern beweglichen Glied, welches jenen Stützarm (31) trägt, angreift.

13. Gangschaltung nach Anspruch 12, worin dieser Stützarm (31) und die Raste (30) sich auf parallel zu Drehzapfen (3, 4, 7, 8), welche diese Befestigungs- (1), Verbindungs- (5, 6) und beweglichen (9) Glieder verbinden, verlaufenden Drehzapfen (31, 33) abstützen und jene auf diesem Steuerglied (20) vorgesehenen Eingriffsteile (21) als Sperrklinkenzähne ausgebildet sind.

14. Gangschaltung nach einem der Ansprüche 1 bis 13, worin dieses Steuerglied (20) als ein allgemein plattenförmiges Glied ausgebildet ist, wobei sich die Eingriffsteile (21) von der Aussenumfangsfläche dieses Steuerglieds (20) mit bogenförmigen Eingriffsflächen (21a) nach innen erstrecken.

15. Gangschaltung nach Anspruch 1, worin sich ein Stützarm (31) auf einem (8) von mehreren Drehzapfen (3, 4, 7 8), welche jene Befestigungs- (1), Verbindungs- (5, 6) und bewegliche (9) Glieder verbinden, abstützt, wobei dieser Stützarm (31) an einem Ende dieser Zugfeder (41) angreift, diese Raste (30) sich auf diesem Stützarm (31) über einen sich senkrecht zu jenem Drehzapfen (8) erstreckenden Stützzapfen (36) abstützt und diese Energiespeicherfeder (40) mit ihrem ersten Ende an dieser Raste (30) und mit ihrem zweiten Ende an diesem Stützarm (31) angreift.

16. Gangschaltung nach einem der Ansprüche 1 bis 15, worin $F_1$ die Federkraft dieser Rückstellfeder (12), $F_2$ diejenige dieser Energiespeicherfeder (40) und $F_3$ diejenige dieser Zugfeder (41) darstellen, wobei diese Federkräfte in einer solchen Beziehung zueinander stehen, dass $F_2 > F_1 > F_3$.

FIG. 1

FIG. 2

FIG. 3

FIG. 4

**FIG. 5**

**FIG. 6**

**FIG. 7**

FIG.8

FIG.9

FIG.10

# FIG. II

# FIG. I2

4

0 020 092

FIG. 13

FIG. 14

FIG. 15

5

FIG. 16

FIG. 17

FIG. 18

FIG. 19

FIG. 20